# EUROPEAN PATENT SPECIFICATION

(11) **EP 3 501 950 B1**
(45) Date of publication and mention of the grant of the patent: **08.04.2020**
(21) Application number: 18198691.0
(22) Date of filing: 04.10.2018
(51) Int. Cl.: B62D 21/14, B62D 21/20, B60P 1/64, B62D 53/06, B62D 63/06

(54) **ECCENTRIC BEARING ASSEMBLY FOR TELESCOPIC EXTENSIBLE CONTAINER CARRIER VEHICLES**
EXZENTRISCHE LAGERANORDNUNG FÜR TELESKOPISCHE AUSZIEHBARERE CONTAINERTRÄGERFAHRZEUGE
ENSEMBLE PALIER À EXCENTRIQUE POUR VÉHICULES DE PORTE-CONTENEURS EXTENSIBLES TÉLESCOPIQUES

(30) Priority: 18.12.2017 TR 201720569
(43) Date of publication of application: 26.06.2019
(73) Proprietor: Tirsan Treyler Sanayi Ve Ticaret Anonim Sirketi, 54580 Sakarya (TR)
(72) Inventor: DOGU, Cavit Ceyhun, SAKARYA (TR); TOPRAK, Beytullah, SAKARYA (TR)
(74) Representative: Yamankaradeniz, Kemal

(56) References cited:
- EP-A1- 3 093 220
- JP-A- H07 277 060
- JP-A- 2013 103 623
- JP-U- S59 192 477

## Description

### Technical Field

The invention relates to an eccentric bearing assembly used to adjust the front extendable platform assembly of the container carrier vehicle with telescopic construction running with the movement of one or more concentric frames.

In particular, the invention is related to eccentric bearing assembly which is mounted on the telescopic extensible container carrier vehicle to adjust the dimensional defects resulting from the deterioration of the parallelism of front extendable platform assembly to the telescopic extensible container carrier vehicle and which provides independent movement capability up and down to the right and left sides of the telescopic extensible container carrier vehicle. Such an assembly is known from EP3093220.

### The Current Status of the Technique

The container semi-trailer vehicle is produced for container transportation and has specific sizes and a certain number of container locks. According to the type of containers to be transported by container carriers, their height and spects vary. Extensible container carriers with telescopic construction consist of a medium-extensible platform assembly, front extendable platform assembly and rear-extensible platform assembly.

Adjustable container vehicles with telescopic construction can be adjusted with mechanisms in front, middle and rear extensible platform assemblies such as gear, bearings, etc. The mechanisms used act on the force movement against restricted areas with the help of channels or gears. Thanks to this operating principle, the vehicle can be adjusted and loaded according to appropriate container types which comply to ISO 668 norms. Due to its adjustable weight, it also prevents vehicle diversity according to the load it will carry.

In the extensible telescopic container vehicles used in the current technique, the bearing structure is used in the front extendable assembly. Thanks to this method, the front-extensible assembly can be adjusted to the desired size in the direction of the force and provides ease of loading.

However, some problems are encountered during the production phase and after-sales stage of the bearing construction.

The tolerance of the bearing structure to the channel through which it proceeds is x millimeters and the tolerance is limited by the manufacturer to small values. The limited tolerance is very important for the correct operation of the function and the smallness of the tolerance value makes production difficult by creating a disadvantage. Component mounting cannot be performed if the bearing in the bearing assembly or the front extensible assembly is out of tolerance and similar faults are difficult to revise on the finished vehicle.

In the current technique, the manufacturers make costly high fixtures and show precise workmanship in order not to encounter similar problems. However, all these problems negatively affect the accuracy rate and labour times in the first instance.

The problem experienced by the users after-sales is that the weight point is in the front area during the adjustment of the front extendable platform. Giving the X millimeter value, which is the operating tolerance of bearing in the channel, as manufacturing and installation tolerance causes the front extensible platform to fall forward and squeezed in the channel during operation. In such cases, it is very difficult for the user to move the front-extensible assembly by force, and the user needs to be assisted by machine power. Solutions such as machine power damage the bearing and front-extensible telescopic structure. The front extendable platform assembly whose construction is damaged is subjected to a difficult costly modification process after losing its parallelism to the chassis.

Although the usage of functional vehicles with high tonnage is sensitive, this issue is not taken into consideration by the users. Manual interventions after deformation of the vehicle over time cause the two frames to loose interlocking functionality and as a result the front-extensible assembly and bearing structure break down.

Another problem in the current technique is that after the driver applies F force to the front area of the vehicle in order to bring the front extensible platform assembly to the desired size, the weight point of the front extensible platform assembly drops at a certain extent. As a result of the fall, the front platform running between the two telescopic frames squeezes into the outer frame because of the weight point. Even if the jamming is eliminated by high tolerance, the front-extensible platform assembly looses its parallelism to the vehicle.

As a result, due to the aforementioned negativities and deficiencies, there is a need to make innovations in the relevant technical field.

### The Purpose Of The Invention

The current invention relates to an eccentric bearing assembly developed for telescopic extensible container carrier vehicles which meets the above-mentioned requirements, eliminate all disadvantages and provide additional advantages.

The aim of the invention is to increase the advantages of the bearing structure which is used in the front extensible assembly to improve the existing construction without going out of the usual construction and to change to the eccentric structure in the new construction in order to eliminate the disadvantages.

The purpose of the invention is to provide independent movement capability up and down to the right and left area of the front-extensible assembly due to the eccentric structure.

The purpose of the invention is to eliminate manufacturing defects with the functional movement provided by the eccentric structure in the event that the manufacturing tolerances of the assembly and welded manufacturing processes are exceeded.

The purpose of the invention is to enable the bearing to be adjusted with up-down movement within the values allowed by ISO 668 thanks to the eccentric movement of the bearing, even if the manufacturing and assembly errors are greater than x mm. During the process, eccentric motion is provided by adjusting the mechanism by means of elements such as screw die, wrench.

It is an object of the invention to provide an extra tolerance outside the working tolerance with the advantages provided by the construction.

It is an object of the invention to increase the accuracy rate at the first time and thus reduce the labour time to be performed before and after production.

Another purpose of the invention is to provide the vehicle with the ability to move up-down on the right and left sides of the vehicle independently of each other in eccentric bearing construction, with elements such as screw die and wrench, to prevent the weight point of the front extensible platform assembly to be reduced and to loose parallelism to the vehicle after the driver applies F force to the front area of the vehicle in order to bring the front extensible platform assembly to the desired size.

It is a further object of the invention to make clockwise adjustment available for the front extensible platform assembly and thus make the squeezed front extensible platform parallel with the vehicle. In this way, it is possible to intervene without causing damage to the telescopic structure and bearing.

Another purpose of the invention is to adjust the dimensional defects caused by the deformation of the front-extensible platform assembly due to use over time and disruption of the parallelism to the vehicle with eccentric motion. Thus, the cost of service is eliminated by preventing the vehicle from going to the park or service.

Another object of the invention is to achieve high cost savings by eliminating the geometric problems that disrupt the construction by eccentric motion.

In order to achieve the above-mentioned aims, the invention is related to an eccentric bearing assembly which is mounted on a telescopic extensible container carrier vehicle to adjust the dimensional defects resulting from the deterioration of the parallelism between a front extendable platform assembly (20) mounted on the telescopic extensible container carrier vehicle and which provides independent movement capability up and down to the right and left sides of the front extendable platform assembly (20) which is located on the telescopic extensible container carrier vehicle (T), comprising:
- a bearing plate holding all the elements of the eccentric bearing assembly,
- a camshaft, which provides up-down movement to the front extensible platform assembly by providing the mentioned bearing with eccentric movement in exchange for torque,
- a bearing bush for positioning the mentioned camshaft on the bearing plate,
- a connector to ensure that the bearing is brought to the desired position on the camshaft and that the position is maintained,
- an outer bearing channel formed in the front extendable platform for the purpose of ensuring that the bearing, which provides the parallelism between the front extendable platform and the telescopic extensible container vehicle, is supported in bearings,
- an inner bearing channel formed in the front extendable platform assembly for the purpose of ensuring that the bearing provides the front extendable platform assembly with up-down movement,
- a connecting plate which is located on the middle extensible platform assembly for the purpose of connecting the eccentric bearing assembly to the telescopic extensible container carrier vehicle.

The structural and characteristic features of the invention and all advantages thereof will be more clearly understood by means of the following figures and detailed description which are given referring to these figures. Therefore, evaluation should be done taking these figures and detailed explanation into consideration.

### Figures to Help in Understanding the Invention

**Figure-1:** Perspective view of the telescopic extensible container carrier vehicle.
**Figure-2:** Front perspective view of the eccentric bearing assembly.
**Figure-3:** The rear perspective view of the eccentric bearing assembly.
**Figure-4:** A perspective view of the medium-extensible platform assembly.
**Figure-5:** A perspective view of the front platform assembly.
**Figure-6:** Side-sectional view of the front extendable platform assembly.
**Figure-7:** Top sectional view of the eccentric bearing assembly.

The drawings do not necessarily have to be scaled and the details that are not necessary to understand the present invention may be omitted. Furthermore, the elements which are at least substantially identical or have at least substantially identical functions are indicated by the same number.

### Description of Component References

**10.** Middle-extensible platform assembly
**11.** Connecting plate
**20.** Front extendable platform assembly
**21.** Outer bearing channel
**22.** Inner bearing channel
**30.** Eccentric bearing assembly
**31.** Bearing plate
**32.** Bearing
**33.** Camshaft
**34.** Bearing bush
**35.** Connector
**40.** Rear-extensible platform assembly
**T.** Telescopic extensible container carrier

### Detailed Description Of The Invention

In this detailed description, providing independent up-down movement capability to the right and left sides of the telescopic extensible container carrier vehicle (T), eccentric bearing assembly (30) mounted on the telescopic extensible container carrier vehicle for adjusting the dimensional defects resulting from the deterioration of parallelism between the extendable platform assembly (20) and the telescopic extensible container carrier vehicle (T) as a result of deformation due to use over time explained only for a better understanding of the subject and without any limiting effects.

Figure-1 shows a perspective view of the telescopic extensible container carrier vehicle (T). The telescopic extensible container carrier vehicle (T), which is produced for carrying containers and which has specific number of sizes and container locks and which has front, rear and middle extensible telescopic semi-trailer vehicle, consists of a middle-extensible platform assembly (10), a front-extensible platform assembly (20) and a rear-extensible platform assembly (40).

The middle-extensible platform assembly (10), the front extendable platform assembly (20) and the rear-extensible platform assembly (40) of the telescopic extensible container carrier vehicle (T) can be adjusted according to the kind of container it will carry. Thus, more than one container size can be addressed with a vehicle.

The eccentric bearing assembly (30), front perspective view of which is shown in Figure-2 and the rear perspective view of which is shown in Figure-3, consists of the bearing plate (31) which holds all the elements of the eccentric bearing assembly (30) together, the bearing (32) providing the movement of the front platform assembly (20), wherein the camshaft (33) provides eccentric movement to the bearing (32) and gives up-down movement to the front platform assembly (20) (in the direction indicated by x and y in figure-6), bearing bush (34) for positioning the camshaft (33) on the bearing plate (31) and the connector (35) which enables the bearing (32) to be moved to the desired position on the camshaft (33) and to maintain the position.

The middle-extensible platform assembly (10) is the second main component forming the body of the telescopic extensible container carrier vehicle (T) after the chassis, which can be opened and adjusted telescopically according to the load to be carried. The connection of the eccentric bearing assembly (30) to the telescopic extensible container carrier (T) is provided by the connecting plate (11), which is positioned on the medium-extensible platform assembly (10). Mentioned connecting plate (11) and bearing plate (31) have the same construction. Figure-4 is a perspective view of the middle-extensible platform assembly (10).

The front extensible platform assembly (20), whose perspective view is given in Figure-5, is the platform assembly which forms the adjustable front area of the semi-trailer vehicle according to the load to be carried by the telescopic extensible container vehicle (T).

Four eccentric bearing assemblies (30) are connected to the telescopic extensible container carrier vehicle (T). Two are positioned to the left of the telescopic extensible container carrier vehicle (T) and the other two are positioned to the right of the telescopic extensible container carrier vehicle (T). The movement of one of the bearings (32) positioned on the left of the telescopic extensible container carrier vehicle (T) provides the parallelism between the extendable platform assembly (20) and the telescopic extensible container vehicle (T), while the movement of the other bearing (32) provides the back and forth movement (in A and B directions) of the front extensible platform assembly (20) in the middle-extensible platform assembly (10).

The movement of the camshaft (33) is achieved by applying the clockwise and counterclockwise torque to the connector (35) in accordance with the problems experienced and demands. The bearing (32) moving in the inner bearing channel (22) with movement of the camshaft (33), provides independent movement capability up and down (in the X and Y directions) to the right and left areas of the front extendable platform assembly (20) and therefore to the telescopic extensible container carrier vehicle (T). As a result of deformation due to use over time, dimensional defects, resulting from the disruption of the parallelism between front extendable platform assembly (20) and the telescopic extensible container carrier vehicle (T), are adjusted with the movements of the bearing (32) in the outer bearing channel (21) (in the x and y directions). Mentioned connector (35) is a nut.

### The operating principle of the eccentric bearing assembly (30) is as follows:

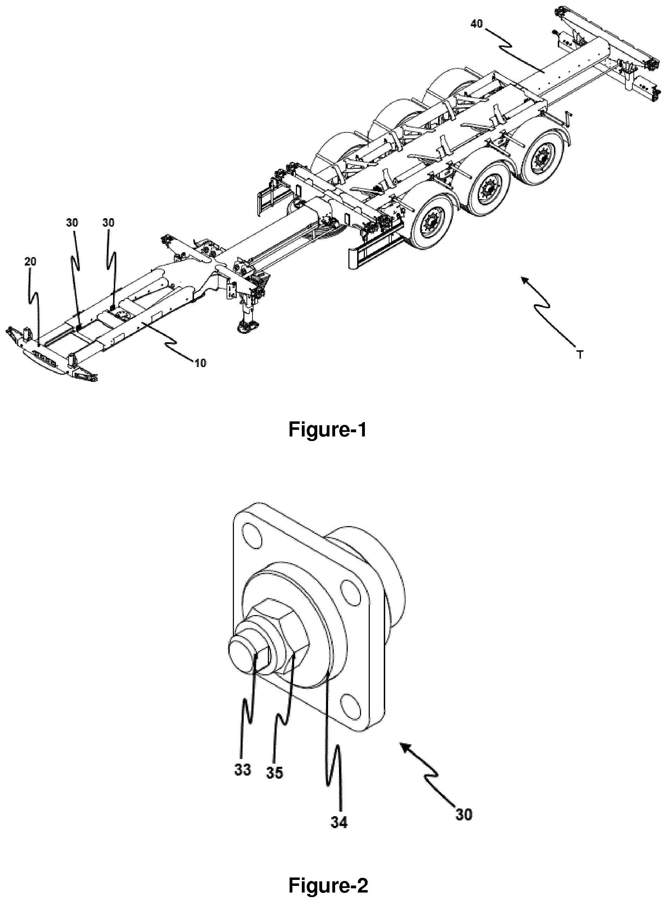

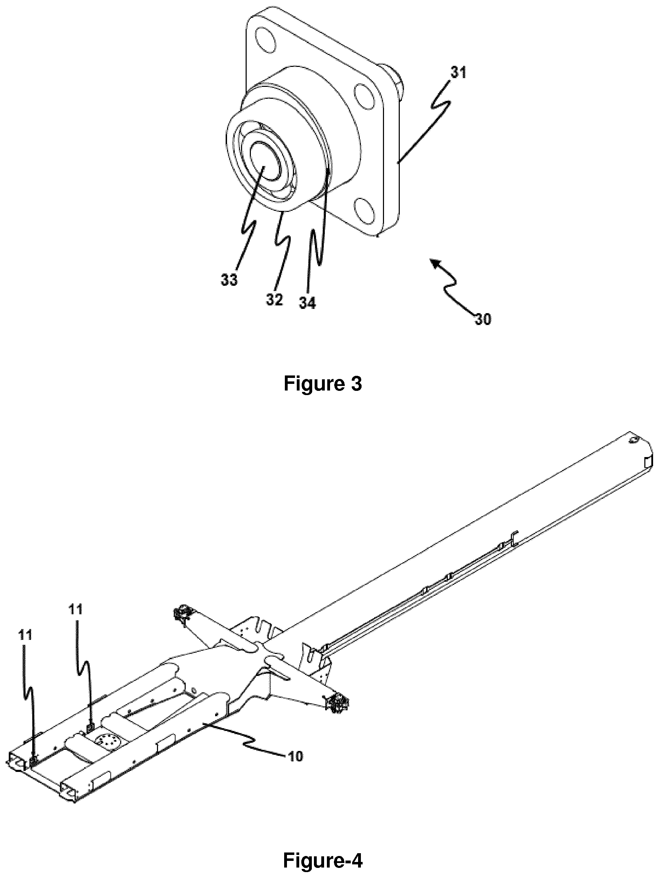

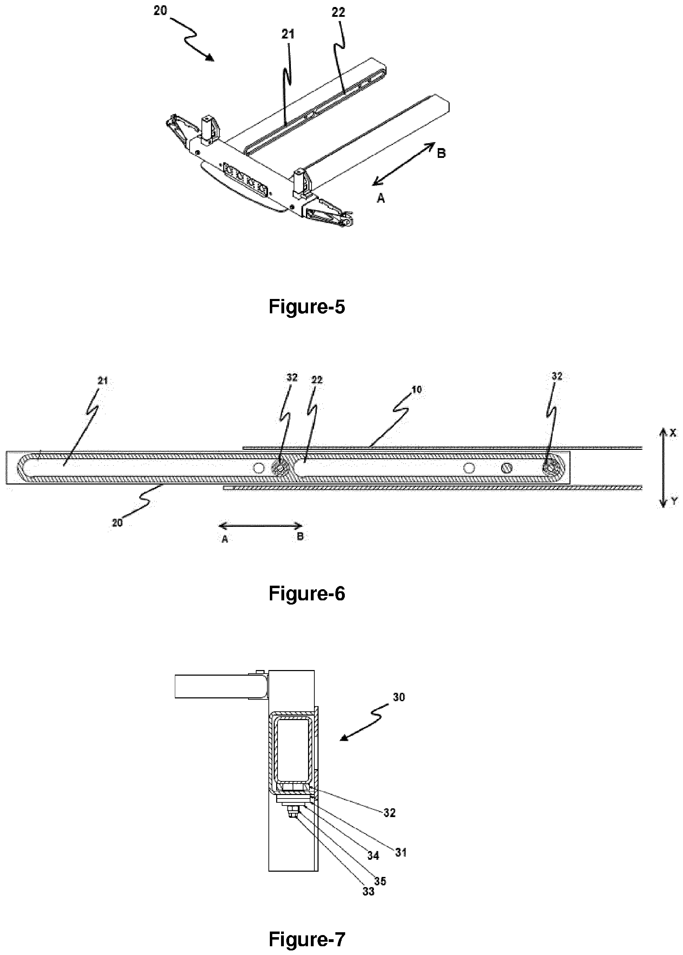

After the problems, the driver applies F force to the connector (35) of the eccentric bearing assembly (30) located in the front region of the telescopic extensible container carrier vehicle (T) with elements such as wrench and screw die to extend the front platform assembly (20) to bring the front extendable platform assembly to the desired size and parallelism or to make the front extendable platform assembly (20) functional. The applied force is transmitted to the bearing (32) by the camshaft (33) and the bearing (32) is moved in the bearing channel (21) (figure-6, in the x-y direction). The telescopic extensible container carrier vehicle (T) is thus capable of moving up-down (in X-Y direction as shown in fig. 6) independently of each other in the right and left areas.

## Claims

1. Eccentric bearing assembly (30) mounted on a telescopic extensible container carrier vehicle to adjust the dimensional defects resulting from the deterioration of the parallelism between a front extendable platform assembly (20) mounted on the telescopic extensible container carrier vehicle and which provides independent movement capability up and down to the right and left sides of the front extendable platform assembly (20) which is located on the telescopic extensible container carrier vehicle (T), comprising:
• a bearing plate (31) which holds all the elements of the eccentric bearing assembly (30) together,
• a camshaft (33) providing up-down movement to the front extendable platform assembly (20) by providing eccentric movement to a bearing (32) in return for the torque;
• a bearing bush (34) for positioning the camshaft (33) on the bearing plate (31),
• a connector (35) to ensure that the bearing (32) is brought to the desired position on the camshaft (33) and that the position is maintained,
• an outer bearing channel (21) formed in the front extendable platform assembly (20) for the purpose of ensuring that the bearing (32), which provides the parallelism between the front extendable platform assembly (20) and the telescopic extensible container carrier vehicle, is supported in bearings,
• an inner bearing channel (22) formed in the front extendable platform assembly (20) for the purpose of ensuring that the bearing (32) provides the front extendable platform assembly (20) with up-down movement,
• a connecting plate (11), which is positioned on a medium-extensible platform assembly (10), to connect the eccentric bearing assembly (30) to the telescopic extensible container carrier vehicle (T).

2. A bearing assembly (30) according to claim 1, **characterized in that** the connector (35) is a cap nut.

## Patentansprüche

1. Exzentrische Lagereinheit (30), die an einem teleskopisch ausfahrbaren Containersattelfahrzeug angebracht ist, um Dimensionsfehler auszugleichen, die aus einer Verschlechterung der Parallelität zwischen einer vorderen ausfahrbaren Plattformeinheit (20) resultieren, die an dem teleskopisch ausfahrbaren Containersattelfahrzeug angebracht ist und eine unabhängige Bewegungsfähigkeit nach oben und unten zur rechten und linken Seite der vorderen ausfahrbaren Plattformeinheit (20) bereitstellt, die sich an dem teleskopisch ausfahrbaren Containersattelfahrzeug (T) befindet, umfassend:
• eine Lagerplatte (31), die alle Elemente der exzentrischen Lagereinheit (30) zusammenhält;
• eine Nockenwelle (33), die eine Aufwärts-Abwärtsbewegung der vorderen ausfahrbaren Plattformeinheit (20) bereitstellt, indem eine exzentrische Bewegung an ein Lager (32) als Reaktion auf Drehmoment bereitstellt;
• eine Lagerbuchse (34) zur Positionierung der Nockenwelle (33) an der Lagerplatte (31);
• einen Verbinder (35), um sicherzustellen, dass das Lager (32) an die gewünschte Position an der Nockenwelle (33) gebracht wird, und dass die Position aufrechterhalten wird;
• einen äußeren Lagerkanal (21), der in der vorderen ausfahrbaren Plattformeinheit (20) zu dem Zweck ausgebildet ist, sicherzustellen, dass das Lager (32), das die Parallelität zwischen der vorderen ausfahrbaren Plattformeinheit (20) und dem teleskopisch ausfahrbaren Containersattelfahrzeug bereitstellt, in Lagern gelagert wird;
• einen inneren Lagerkanal (22), der in der vorderen ausfahrbaren Plattformeinheit (20) zu dem Zweck ausgebildet ist, sicherzustellen, dass das Lager (32) an die vordere ausfahrbare Plattformeinheit (20) Aufwärts-Abwärtsbewegung bereitstellt;
• eine Verbindungsplatte (11), die an einer mittleren ausfahrbaren Plattformeinheit (10) positioniert ist, um die exzentrische Lagereinheit (30) mit dem teleskopisch ausfahrbaren Containersattelfahrzeug (T) zu verbinden.

2. Lagereinheit (30) nach Anspruch 1, **dadurch gekennzeichnet, dass** der Verbinder (35) eine Hutmutter ist.

## Revendications

1. Ensemble de palier excentrique (30) monté sur un véhicule porte-conteneurs extensible télescopique pour ajuster les défauts dimensionnels résultant de la détérioration du parallélisme entre un ensemble de plate-forme extensible avant (20) monté sur le véhicule porte-conteneurs extensible télescopique et qui fournit une capacité de mouvement indépendant vers le haut et vers le bas sur les côtés droit et gauche de l'ensemble de plate-forme extensible avant (20) qui est situé sur le véhicule porte-conteneurs extensible télescopique (T), comprenant :
• une plaque d'appui (31) qui maintient ensemble tous les éléments de l'ensemble de palier excentrique (30),
• un arbre à cames (33) assurant un déplacement vertical de l'ensemble de la plate-forme extensible avant (20) en fournissant un mouvement excentrique à un palier (32) en échange du couple ;
• un coussinet (34) pour le positionnement de l'arbre à cames (33) sur la plaque d'appui (31),
• un raccord (35) pour assurer que le palier (32) est amené à la position souhaitée sur l'arbre à cames (33) et que cette position est maintenue,
• un canal de palier extérieur (21) formé dans l'ensemble de plate-forme extensible avant (20) afin de garantir que le palier (32), qui assure le parallélisme entre l'ensemble de plate-forme extensible avant (20) et le véhicule porte-conteneurs extensible télescopique, soit supporté dans des paliers,
• un canal de palier intérieur (22) formé dans l'ensemble de plate-forme extensible avant (20) afin de garantir que le palier (32) un déplacement vertical de l'ensemble de plate-forme extensible avant (20),
• une plaque de liaison (11), qui est positionnée sur un ensemble de plate-forme extensible centrale (10), pour relier l'ensemble de palier excentrique (30) au véhicule porte-conteneurs télescopique extensible (T).

2. Ensemble de palier (30) selon la revendication 1, **caractérisé en ce que** le raccord (35) est un écrou borgne.
